# EUROPEAN PATENT SPECIFICATION

(11) **EP 0 524 668 B1**
(45) Date of publication and mention of the grant of the patent: **03.03.1999**
(21) Application number: 92201631.6
(22) Date of filing: 05.06.1992
(51) Int. Cl.: A01D 43/10, A01D 82/00

(54) **A machine for processing haulm-like crops**
Maschine zum Bearbeiten von halmähnlichen Gewächsen
Machine pour le traitement de végétaux à tiges

(30) Priority: 10.06.1991 NL 9100993
(43) Date of publication of application: 27.01.1993
(73) Proprietor: MAASLAND N.V., 3155 PD Maasland (NL)
(72) Inventor: van der Lely, Cornelis, Zug (CH)
(74) Representative: Corten, Maurice Jean F.M.

(56) References cited:
- EP-A- 0 297 011
- EP-A- 0 349 015
- DE-A- 2 235 041
- DE-A- 3 512 300
- US-A- 4 446 678
- SOVIET INVENTIONS ILLUSTRATED Section PQ, Week 8405, Derwent Publications Ltd., London, GB; Class P, AN 84-028534 & SU-A-1 007 595 (KAZAN AGRIC INST)
- SOVIET INVENTIONS ILLUSTRATED Section PQ, Week 8308, Derwent Publications Ltd., London, GB; Class P, AN 83-C6788K & SU-A-919 632 (VOZOVIK)

## Description

The present invention relates to a machine for processing haulm-like crops, such as grass or suchlike material, comprising a frame and crusher means, which are constructed in such a way that the crop will be put onto the ground in a number of tunnel-like configurations lying side by side on the ground and extending in the direction of operative travel, the crusher member including a crusher unit having two crusher rollers which extend parallel to one another.

A machine as described above is known from DE-A-22 35 041. This machine is provided with a crusher unit, having conical rollers which extend parallel to one another and which are formed by two adjacently arranged conical portions on an upper roller and two on a lower roller. The rollers are so disposed relative to each other that a portion of one conical roller meshes with a portion of the other roller, as a result of which a swath is formed with one tunnel-like configuration. The machine according DE-A-22 35 041 has the disadvantage that the swath does not have a sufficient coherent crop structure.

From US-A-4 446 678 there is known a rotative plant material squeezing machine having rollers with a plurality of conical portions which mesh with each other. When the material has passed these rollers it is again squeezed by two rollers which are not provided with conical portions. Consequently there is not formed a swath with a tunnel-like configuration.

The invention has for its object to provide a machine of the type described in the above paragraph with which it is possible to form a swath having a coherent crop structure.

According to the invention this is achieved in that each of the crusher rollers is formed by at least four adjacently arranged conical portions, the conical portions of each group of two adjacent conical portions having an opposite conical variation, whereby the rollers are so disposed relative to each other that the greatest diameter of the conical portions of one roller meshes with the smallest diameter of the conical portions of the other conical roller, such that at least two tunnel-like configurations are provided on a same swath on the ground. In this manner, the crop haulms to be fed to the crusher member, especially when they are of an adequate length, are interweaved and a swath having a coherent crop structure can be obtained, which facilitates the handling of the swath and less losses will occur when the swath is picked up. In this connection, it has to be emphasized that the invention furthermore relates to a machine for processing haulm-like crops, such as grass or suchlike material, comprising a frame and crusher means, characterized in that the crusher means is provided with a crusher member having two conical crusher rollers which co-operate with each other and are drivable at different speeds of rotation.

An adequate interweaving of the mown crop can be obtained when, in accordance with the invention, the machine is provided with means, by means of which a portion of the haulms can be moved in a direction which encloses an angle with the direction in which a different portion of the haulms are movable. For this reason, the invention furthermore relates to a machine for processing haulm-like crops, such as grass or suchlike material, comprising a frame and crusher means, which machine is characterized in that means are provided, by means of which a portion of the haulms can be moved in a direction enclosing an angle with the direction in which a further portion of the haulms is movable. This is more particularly rendered possible when these means are constituted by adjacently and oppositely arranged portions of the conical crusher rollers, of which those portions which in the individual crusher rollers are adjacent to each other and the opposite portions of the different conical crusher rollers have a mutually opposite conical variation in a predominantly horizontal direction extending transversely to the direction of operative travel.

The above-defined crusher member is preferably used in a machine which also includes a cutter bar, as well as at least one crop displacing member which is rotatable about a shaft located approximately in the direction of operative travel, this crop displacing member being disposed near the rear end of the cutter bar. More particularly, when two of such crop displacing members are arranged on either side behind the cutter bar and at some distance from the ends thereof, it is possible for the crop displacing members to throw the mown crop transversely to the direction of operative travel onto crop haulms dropping in the direction of operative travel in the area behind the cutter bar between the two crop displacing members. A certain degree of crop haulm interweaving is then already effected before crushing, so that, after they have been crushed between the conical crusher rollers, the haulms will be interweaved to a still greater extent and a swath can be formed having an increased coherent crop structure.

In accordance with an other aspect of the present invention, the machine includes means, by means of which the crop can be deposited in a swath on the soil in such a manner that under the swath a plurality of tunnel-shaped spaces are produced in the direction of operative travel. By depositing the swath in this manner, the drying of the crushed crop is still further promoted. Because of the specific shape of the conical crusher rollers, the coherent crop structure upon leaving the crusher rollers is such that the possibility of depositing this crop structure on the soil with a plurality of tunnel-shaped spaces is already available in potential. So as to actually realize such a swath in the desired manner, the machine is preferably provided with tunnel-shaped elements which are disposed such that a swath can be deposited from the crusher member in the tunnel-like shape via the tunnel-shaped elements. For that reason, these tunnel-shaped elements reach more particularly to near the soil.

For a better understanding of the invention and to show how the same may be carried into effect, reference will now be made, by way of example, to the accompanying drawings, in which:

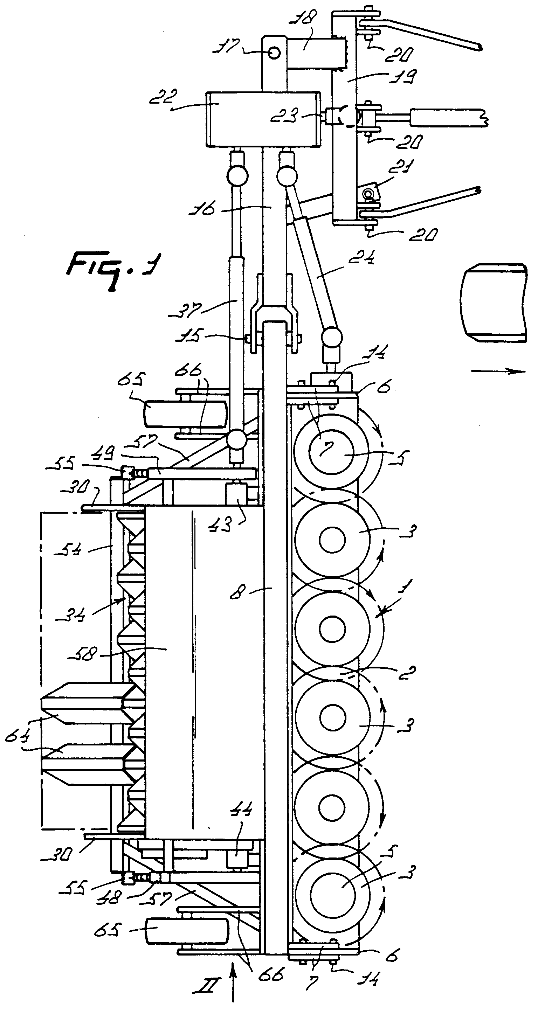

Figure 1 is a plan view of a machine for processing haulm-like crops in accordance with the invention;

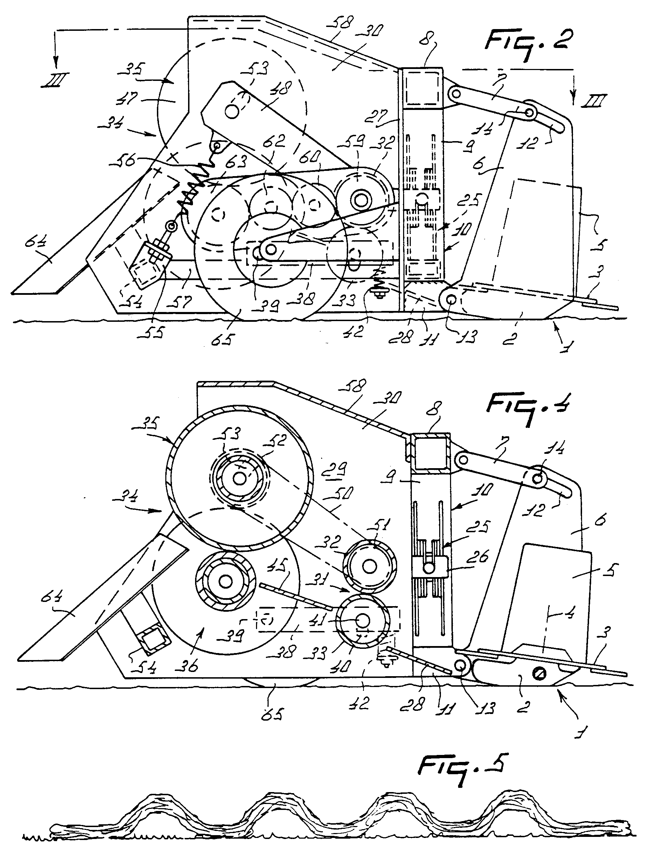

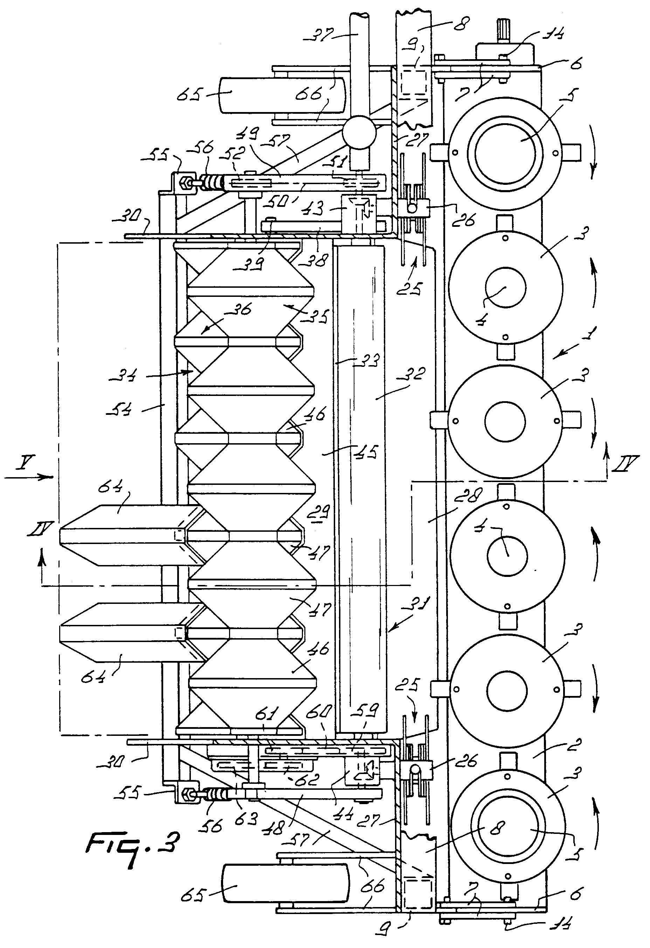

Figure 2 is a side vieuw of this machine;
Figure 3 shows, in a more detailed manner and to an enlarged scale, the plan view shown in Figure 1 of the machine in accordance with the invention, the covering hood of the machine having been omitted;
Figure 4 is a cross-sectional view of the machine shown in Figure 3, taken on the line IV-IV, and
Figure 5 shows the swath as it is deposited by the machine in accordance with the invention.

The machine in accordance with the embodiment shown, represents a mower-crusher, the mower having a cutter bar 1 assembled from a supporting beam 2 and mowing members 3. Each of the mowing members 3 is connected capably of rotation about the upwardly extending rotary shaft 4 to the supporting beam 2. A crop guiding drum 5 is disposed on the outer mowing members 3. On either end, the cutter bar is provided with an upwardly extending supporting plate 6. Via these supporting plates 6 and connecting arms 7, the cutter bar 1 is connected to a carrier 8 which extends transversely to the direction of operative travel and parallel to the cutter bar 1. This carrier 8, together with the downwardly extending beams 9 that are rigidly connected to the ends thereof, constitute a carrier frame 10. At its bottom side, the cutter bar 1 is connected pivotably to the carrier frame 10 through the intermediary of supporting elements 11. At the upper side, each of the supporting plates 6 is provided with an aperture 12 which, relative to the pivot shaft 13, has a shape in accordance with the sector of a circle, the arrangement being such that, relative to the supporting elements 11, the cutter bar 1 can be pivoted to a limited extent, while a shaft 14 disposed between the connecting arms 7 moves through the aperture 12. By means of a pivot shaft 15 which om operation extends in the direction of operative travel, the carrier frame 10 is connected to a carrier beam 16. With the aid of a vertical pivot shaft 17 and a support 18, the carrier beam 16 is connected to a trestle 19. The trestle 19 is provided with coupling points 20, by means of which the trestle 19 can be supported in the three-point lifting hitch of a tractor. During normal operation, the carrier beam 16 extends transversely to the direction of operative travel, whereas, when the cutter bar 1 is subjected to a significantly counterpressure, the cutter bar 1 can move rearwardly together with the carrier frame 10 and the carrier beam 16 about the pivot shaft 17 against the pressure of a spring-fitted element in a stroke limiter 21. The carrier frame 10 can be moved upwardly relative to the carrier beam 16, in the transport position, by means of a (non-shown) operating cylinder. On the carrier beam 16 there is disposed a gear box 22, whose ingoing shaft 23 can be connected via a universal joint to the power take-off shaft of a tractor, while a first outgoing shaft 24 thereof is connected via universal joints to the drive for the mowing members 3 in the cutter bar 1. Near the rear ends of the cutter bar there are disposed crop displacing members 25, which are rotatable about shafts 26 extending approximately horizontally in the direction of operative travel. Behind these crop displacing members 25 there extend screening plates 27 which are connected to the carrier frame 10, while a first crop guiding plate 28 extends behind the cutter bar 1 and between the crop displacing members 25. This crop guiding plate 28 is disposed such that it slopes upwardly and rearwardly at a slightly oblique angle. The crop displacing members 25 are constituted by spring-fitted pairs of tines, which are arranged such around the shaft 26 that they extend radially outwardly, the arrangement being such that these crop displacing members 25 throw the haulms of the crop mown by the outer cutter members transversely to the direction of operative travel onto the haulms mown by the inner mowing members and dropping in the direction of operative travel. Thus, the haulms are interweaved to a certain extent. The crop flow thus obtained, which has a width less than the cutter beam 1, is fed over the first crop guiding plate 28 to crusher means having a crusher member 29. This crusher member is disposed between two carrier plates 30 which extend vertically into the direction of operative travel and are rigidly connected to the screening plates 27. The crusher member 29 comprises a first crusher unit 31, which is assembled from crusher rollers 32 and 33, and a second crusher unit 34 comprising crusher rollers 35 and 36.

The crusher rollers 32 and 33 are of a cylindrical design, extend parallel to one another and are arranged predominantly one above the other. The upper crusher roller 32 is arranged drivably between the carrier plates 30 and is driven directly via universal joints with the aid of a second outgoing shaft 37 of the gear box 22. The lower crusher roller 33 is arranged freely rotatably between strips 38, which strips are provided such that in pivot points 39 they are pivotable relative to the carrier plates 30 and connected thereto. The stroke which the strips 38 are capable of making in this situation, is determined by slotted recesses 40 in the carrier plates 30, in which recesses the shaft 41 of the crusher roller 33 is arranged movably. By means of the spring elements 42 arranged between the carrier plates 30 and the relevant strips 38, the lower crusher roller 33 is pushed either against the upper crusher roller 32 or against the haulms conveyed between the crusher rollers 32 and 33. The upper crusher roller 32, which is driven by means of the second outgoing shaft 37, is provided on either side with a respective gear box 43, 44, in which by means of a bevel gear transmission the movement of the shaft 37 is transferred to the rotary shafts 26 of the crop displacing members 25. The already slightly interweaved haulms conveyed over the first crop guide plate 28 to the first crusher unit 31 are pressed between the two crusher rollers 32 and 33 thereof and are fed over a second crop guide plate 45 disposed behind the first crusher unit 31, to the second crusher unit 34. Also this second crop guide plate 45 is disposed such that it slopes upwardly at a slightly oblique angle. The crusher rollers 35 and 36 of the second crusher unit 34 are assembled from bevelled portions 46 and 47. Both adjacently arranged portions 46 and 47 of one conical crusher roller and oppositely arranged portions 46 and 47 of the two crusher rollers 35 and 36 have a mutually opposite conical variation. In addition, the conical crusher rollers 35 and 36 thus formed are so disposed relative to each other that a portion of one conical roller is located substantially above a portion of an oppositely directed conical variation of the other crusher roller, more specifically with such a slight spacing that the two conical crusher rollers 35 and 36 mesh and show a gap which, taken in the direction of operative travel, zig-zags between the two rollers, through which gap the crop flow coming from the first crusher unit 31 is passed. Because of the conical variation, at least portions of the crop are pressed in a direction extending obliquely to the rotary axis of the crusher rollers 35 and 36. Since adjacently arranged portions 46 and 47 of a conical crusher roller have an opposite conical variation, a portion of the haulms can be moved in a direction which encloses an angle with the direction in which a further portion of the haulms can be moved. The crop, which arrived already slightly interweaved at the input of the second crusher unit 34, is additionally interweaved after having been passed through the crusher rollers 35 and 36, so that the crop flow coming from the second crusher unit 34 has a relatively strong coherent structure. Since the second crop guide plate 45 extends to as far as the lower conical crusher roller 36, the rear side of this crop guide plate 45 is given a profile which corresponds to that of the lower conical crusher roller 36. The upper crusher roller 35 is disposed between a strip 48 at one side and a gear case 49 at the other side. The strip 48 and the gear case 49 are arranged such that they are rotatable relative to the carrier plates 30, more specifically in points of rotation which coincide with the centre line of the upper roller 32 of the first crusher unit 31. Inside the gear case 49, a drive chain 50 is passed around a first gearwheel 51, which is disposed on the shaft of the second crusher roller 32, and around a second gearwheel 52 disposed on the shaft of the crusher roller 35. The shaft of the crusher roller 35 is movable in a slotted aperture 53 provided in the carrier plates 30. Behind and between the lower ends of the carrier plates 30, there is provided a connecting beam 54 which is passed through the carrier plates 30, while an angle piece 55 is provided on each of the beam ends. Between an angle piece 55 and a point of application on the strip 48 or the gear case 49, respectively, there is arranged a spring 56 which provides that the shaft of the upper crusher roller 35 of the second crusher unit 34 is pulled to the lowest position in the slotted aperture 53 in the carrier plates 30. Thus, the upper crusher roller 35 is pushed against the lower crusher roller 36 or against the crop haulms passed between the crusher rollers 35 and 36. In addition, between the said connecting beam 54 and the two downwardly extendings beams 9, there are disposed struts 57, while, at its upper side, the machine is provided with a screening plate 58 (omitted in Figure 3) which for the greater part covers the crusher rollers 35 and 36 and is rigidly disposed between the carrier plates 30. The lower crusher roller 36 of the second crusher unit 34 is driven from the gear box 44. This drive includes a gearwheel 59 disposed around the shaft of the upper crusher roller 32 of the first crusher unit 31, as well as gearwheels 60 and 61 subsequently driven thereby; around the shaft of the last gearwheel 61 there is provided a first change wheel 62 which co-operates with a second change wheel 63 provided around the shaft of the lower crusher roller 36 of the second crusher unit 34. By interchanging the two change wheels 62 and 63, the lower crusher roller 36 can be driven at two different speeds. Consequently, it is possible to drive the two crusher rollers 35 and 36 at the same speed as well as at different speeds. Contiguous to the lower crusher roller 36 of the second crusher unit 34, the crusher means are provided with tunnel-shaped elements 64 which are rigidly connected to the connecting beam 54. These tunnel-shaped elements 64 are contiguous to those portions of the lower crusher roller 36 that have the largest diameter and from there extend obliquely rearwardly and downwardly to near the soil, the arrangement being such that they support the crop flow zig-zagging from the gap between the two rollers 35 and 36 in said zig-zag form and guide it towards the soil during the forward movement of the machine, so that ultimately the crop flow is deposited in a swath as depicted in Figure 5. The crop deposited in this swath has a highly coherent structure due to the shape of the conical crusher rollers 35 and 36 and, because of the hollow spaces created during the deposition between the swath and the soil onto which the swath is deposited, can dry relatively rapidly, while it is easy to be handled by e.g. crop loaders. The machine is furthermore provided with wheels 65 which are connected on both sides with the aid of supporting plates 66 to the carrier frame 10, or, as is shown in the drawings, to the screening plates 27.

The invention does not only relate to the embodiment described in the foregoing, but also relates to all the details, whether they have been described or not, of the accompanying drawings and as defined in the accompanying claims. It should here be noted that it is possible to implement the machine not as a mower-crusher, but, for example, only as a crusher, it then being sufficient to use only the second crusher unit 34. On the other hand, a machine provided with the second crusher unit 34, i.e. a machine having conical crusher rollers, can alternatively be incorporated in machines other than mowers. Likewise, the crop displacing members 25 might be omitted, although they, in co-operation with a cutter bar, provide already for a first interweaving of the crop flow to be crushed. However, in all these possible applications and conceivable embodiments, the use of conical crusher rollers must be the central issue.

## Claims

1. A machine for processing haulm-like crops, such as grass or suchlike material, comprising a frame (10, 30) and crusher means (29, 64), which are constructed in such a way that the crop will be put onto the ground in a number of tunnel-like configurations lying side by side on the ground and extending in the direction of operative travel, the crusher member (29) including a crusher unit (34) having two crusher rollers (35, 36), which extend parallel to one another, characterized in that each of the crusher rollers (35, 36) is formed by at least four adjacently arranged conical portions (46, 47), the conical portions (46, 47) of each group of two adjacent conical portions (46, 47) having an opposite conical variation, whereby the rollers (35, 36) are so disposed relative to each other that the greatest diameter of the conical portions (46, 47) of one roller meshes with the smallest diameter of the conical portions of the other conical roller, such that at least two tunnel-like configurations are provided on a same swath on the ground.

2. A machine as claimed in claim 1, characterized in that the crusher means (29, 64) are connected to a mower.

3. A machine as claimed in claim 1 or 2, characterized in that the frame (10, 30) is provided with carrier plates (30) which extend perpendicularly to the axis of rotation of the crusher means (29, 64).

4. A machine as claimed in any one of the preceding claims, characterized in that the crusher means (29, 64) comprise a crusher member (29), by means of which at least portions of the crop are pressed in a direction extending obliquely to the rotary axis of the crusher member.

5. A machine as claimed in claim 4, characterized in that the crusher member (29) includes a further crusher unit (31) having cylindrical rollers (32, 33).

6. A machine as claimed in any one of the preceding claims, characterized in that, taken in the direction of operative travel of the machine, the cylindrical crusher unit (31) is disposed such that it precedes the conical crusher unit (34).

7. A machine as claimed in any one of the preceding claims, characterized in that the crusher member (29) comprises two conical crusher rollers (35, 36) which cooperate with each other and are drivable at different speeds of rotation.

8. A machine as claimed in claim 7, characterized in that the two conical crusher rollers (35, 36) are drivable at two different speeds of rotation by means of change wheels (62, 63).

9. A machine as claimed in any one of the preceding claims, characterized in that the machine includes means (46, 47), by means of which a portion of the haulms can be moved in a direction enclosing an angle with the direction in which a further portion of the haulms is movable.

10. A machine as claimed in claim 9, characterized in that the means (46, 47) are constituted by adjacently and oppositely arranged portions of the conical crusher rollers (35, 36), of which those portions which in the individual crusher rollers (35 or 36) are adjacent to each other and the opposite portions of the different conical crusher rollers (35, 36) have a mutually opposite conical variation in a predominantly horizontal direction extending transversely to the direction of operative travel.

11. A machine as claimed in claim 10, characterized in that the conical crusher rollers (35, 36) are arranged such relative to each other that a portion of one conical roller is disposed substantially over a portion of the other conical roller having a conical variation in the opposite direction.

12. A machine as claimed in any one of the preceding claims, characterized in that the machine includes a cutter bar (1) as well as at least one crop displacing member (25) which is rotatable about a shaft (26) located approximately in the direction of operative travel, the crop displacing member (25) being disposed near the rear end of the cutter bar (1).

13. A machine as claimed in claim 12, characterized in that the machine is provided with two crop displacing members (25) which are rotatable about shafts (26) extending approximately into the direction of operative travel and are arranged on either side of the cutter bar (1) behind the cutter bar (1) and at some distance from the ends thereof.

14. A machine as claimed in claim 12 or 13, characterized in that a crop displacing member (25) is of such a design that it throws crop haulms cross-wise onto the cop haulms dropping in the direction of operative travel.

15. A machine as claimed in claim 14, characterized in that the crusher means (29, 64) is disposed such behind the cutter bar (1) and a crop displacing member (25) that, after having been crushed, the crop haulms dropping in the direction of operative travel are tightly interweaved with the crop haulms dropping on them in the direction transversely to the direction of operative travel.

16. A machine as claimed in any one of the preceding claims, characterized in that the machine includes means (64), by means of which the crop can be deposited in a swath on the soil in such a manner that under the swath one or a plurality of tunnel-shaped spaces are produced in the direction of operative travel.

17. A machine as claimed in any one of the preceding claims, characterized in that the machine is provided with tunnel-shaped elements (64) which are disposed such that from the crusher member (29) the swath is deposited in the shape of a tunnel via the tunnel-shaped elements (64).

18. A machine as claimed in claim 17, characterized in that the tunnel-shaped elements (64) extend from the machine to near the soil.

## Patentansprüche

1. Maschine zum Bearbeiten von halmartigem Erntegut, wie z. B. Gras oder dergleichen, mit einem Rahmen (10, 30) und einer Quetschvorrichtung (29, 64), die derart ausgebildet ist, daß das Gut in einer Anzahl von tunnelartigen Gebilden auf dem Boden abgelegt wird, die nebeneinander auf dem Boden liegen und sich in Arbeitsrichtung erstrecken, wobei das Quetschglied (29) eine Quetscheinheit (34) mit zwei parallel zueinander angeordneten Quetschwalzen (35, 36) aufweist,
dadurch gekennzeichnet, daß jede der Quetschwalzen (35, 36) durch mindestens vier aneinander angrenzende konische Teilstücke (46, 47) gebildet ist, wobei die konischen Teilstücke (46, 47) jeder Gruppe von zwei aneinander angrenzenden konischen Teilstücken (46, 47) einen entgegengesetzten konischen Verlauf aufweisen, wobei die Walzen (35, 36) relativ zueinander derart angeordnet sind, daß der größte Durchmesser der konischen Teilstücke (46, 47) der einen Walze mit dem kleinsten Durchmesser der konischen Teilstücke der anderen konischen Walze in Eingriff tritt, derart, daß ein auf dem Boden liegender Schwad mindestens zwei tunnelartige Gebilde aufweist.

2. Maschine nach Anspruch 1,
dadurch gekennzeichnet, daß die Quetschvorrichtung (29, 64) an eine Mähmaschine angeschlossen ist.

3. Maschine nach Anspruch 1 oder 2,
dadurch gekennzeichnet, daß der Rahmen (10, 30) Tragplatten (30) aufweist, die senkrecht zur Drehachse der Quetschvorrichtung (29, 64) ausgerichtet sind.

4. Maschine nach einem der vorhergehenden Ansprüche,
dadurch gekennzeichnet, daß die Quetschvorrichtung (29, 64) ein Quetschglied (29) aufweist, mittels dessen zumindest Teile des Gutes in eine Schräg zur Drehachse des Quetschgliedes verlaufende Richtung gedrückt werden.

5. Maschine nach Anspruch 4,
dadurch gekennzeichnet, daß das Quetschglied (29) eine weitere Quetscheinheit (31) mit zylindrischen Walzen (32, 33) aufweist.

6. Maschine nach einem der vorhergehenden Ansprüche,
dadurch gekennzeichnet, daß die zylindrische Quetscheinheit (31) in bezug auf die Arbeitsrichtung der Maschine der konischen Quetscheinheit (34) vorläuft.

7. Maschine nach einem der vorhergehenden Ansprüche,
dadurch gekennzeichnet, daß das Quetschglied (29) zwei konische Quetschwalzen (35, 36) aufweist, die miteinander zusammenwirken und mit unterschiedlichen Rotationsgeschwindigkeiten antreibbar sind.

8. Maschine nach Anspruch 7,
dadurch gekennzeichnet, daß die beiden konischen Quetschwalzen (35, 36) durch Wechselgetrieberäder (62, 63) mit zwei unterschiedlichen Rotationsgeschwindigkeiten antreibbar sind.

9. Maschine nach einem der vorhergehenden Ansprüche,
dadurch gekennzeichnet, daß die Maschine Vorrichtungen (46, 47) aufweist, mit denen ein Teil der Halme in eine Richtung zu bewegen ist, die einen Winkel mit der Richtung bildet, in die ein weiterer Teil der Halme zu bewegen ist.

10. Maschine nach Anspruch 9,
dadurch gekennzeichnet, daß die Vorrichtung (46, 47) durch aneinander angrenzend und gegenüberliegend angeordnete Teilstücke der konischen Quetschwalzen (35, 36) gebildet ist, wobei die Teilstücke, die bei den einzelnen Quetschwalzen (35 oder 36) aneinander anliegen, und die gegenüberliegenden Teilstücke der anderen konischen Quetschwalzen (35, 36) einen entgegengesetzten konischen Verlauf aufweisen, der sich in überwiegend horizontaler Richtung quer zur Arbeitsrichtung erstreckt.

11. Maschine nach Anspruch 10,
dadurch gekennzeichnet, daß die konischen Quetschwalzen (35, 36) relativ zueinander derart angeordnet sind, daß ein Teilstück der einen konischen Walze im wesentlichen über einem Teilstück der anderen konischen Walze angeordnet ist, welches einen entgegengesetzten konischen Verlauf aufweist.

12. Maschine nach einem der vorhergehenden Ansprüche,
dadurch gekennzeichnet, daß die Maschine einen Mähbalken (1) sowie mindestens ein Gutverlagerungsglied (25) aufweist, welches um eine etwa in Arbeitsrichtung liegende Achse (26) drehbar ist, wobei das Gutverlagerungsglied (25) nahe dem hinteren Ende des Mähbalkens (1) angeordnet ist.

13. Maschine nach Anspruch 12,
dadurch gekennzeichnet, daß die Maschine zwei Gutverlagerungsglieder (25) aufweist, die um sich etwa in Arbeitsrichtung erstreckende Achsen (26) drehbar und beiderseits des Mähbalkens (1) hinter dem Mähbalken (1) in einem Abstand zu dessen Enden angeordnet sind.

14. Maschine nach Anspruch 12 oder 13,
dadurch gekennzeichnet, daß ein Gutverlagerungsglied (25) derart ausgebildet ist, daß es in Querrichtung Guthalme auf die in Arbeitsrichtung herabfallenden Guthalme wirft.

15. Maschine nach Anspruch 14,
dadurch gekennzeichnet, daß die Quetschvorrichtung (29, 64) hinter dem Mähbalken (1) und einem Gutverlagerungsglied (25) derart angeordnet ist, daß die nach dem Quetschen in Arbeitsrichtung herabfallenden Guthalme mit den quer zur Arbeitsrichtung auf sie fallenden Guthalmen eng verwoben werden.

16. Maschine nach einem der vorhergehenden Ansprüche,
dadurch gekennzeichnet, daß die Maschine eine Vorrichtung (64) aufweist, mittels der das Gut in einem Schwad auf dem Boden abzulegen ist, derart, daß unter dem Schwad ein oder mehrere sich in Arbeitsrichtung erstreckende tunnelförmige Räume gebildet sind.

17. Maschine nach einem der vorhergehenden Ansprüche,
dadurch gekennzeichnet, daß die Maschine tunnelförmige Elemente (64) aufweist, die derart angeordnet sind, daß der Schwad von dem Quetschglied (29) über die tunnelförmigen Elemente (64) in Form eines Tunnels abgelegt wird.

18. Maschine nach Anspruch 17,
dadurch gekennzeichnet, daß sich die tunnelförmigen Elemente (64) von der Maschine bis nahe dem Boden erstrecken.

## Revendications

1. Machine pour traiter des végétaux à tiges, tels que de l'herbe ou des matières similaires, comprenant un châssis (10, 30) et des moyens de compactage (29, 64) qui sont construits de telle manière que la récolte soit déposée au sol en un certain nombre de configurations en forme de tunnels reposant côte à côte sur le sol et s'étendant dans le sens de marche du travail, l'organe de compactage (29) comportant une unité de tassement (34) ayant deux rouleaux presseurs (35, 36) qui s'étendent parallèlement l'un à l'autre, caractérisée en ce que chacun des rouleaux presseurs (35,36) est formé d'au moins quatre parties coniques (46,47) adjacentes entre elles, les parties coniques (46, 47) de chaque groupe de deux parties coniques (46, 47) adjacentes ayant une variation de conicité opposée, les rouleaux (35, 36) étant disposés, l'un par rapport à l'autre, de telle sorte que le plus grand diamètre des parties coniques (46, 47) d'un rouleau engrène avec le plus petit diamètre des parties coniques de l'autre rouleau conique, de telle sorte qu'au moins deux configurations en tunnel sont obtenues sur un même andain sur le sol.

2. Machine selon la revendication 1, caractérisée en ce que les moyens de compactage (29), 64) sont reliés à une faucheuse.

3. Machine selon la revendication 1 ou 2, caractérisée en ce que le châssis (10, 30) est muni de plaques porteuses (30) qui s'étendent perpendiculairement à l'axe de rotation des moyens de compactage (29, 64).

4. Machine selon l'une quelconque des revendications précédentes, caractérisée en ce que les moyens de compactage (29, 64) comprennent un organe de compactage (29) au moyen duquel des parties au moins de la récolte sont pressées dans une direction s'étendant obliquement par rapport à l'axe de rotation de l'organe de compactage.

5. Machine selon la revendication 4, caractérisée en ce que l'organe de compactage (29) comporte une deuxième unité de tassement (31) ayant des rouleaux cylindriques (32, 33).

6. Machine selon l'une quelconque des revendications précédentes, caractérisée en ce que, vue dans le sens de marche du travail de la machine, l'unité de tassement cylindrique (31) est disposée de telle sorte qu'elle précède l'unité de tassement conique (34).

7. Machine selon l'une quelconque des revendications précédentes, caractérisée en ce que l'organe de compactage (29) comprend deux rouleaux presseurs coniques (35, 36) qui coopèrent entre eux et peuvent être entraînés à des vitesses de rotation différentes.

8. Machine selon la revendication 7, caractérisée en ce que les deux rouleaux presseurs coniques (35, 36) peuvent être entraînés à deux vitesses de rotation différentes au moyen de roues dentées interchangeables (56, 63).

9. Machine selon l'une quelconque des revendications précédentes, caractérisée en ce que la machine comporte des moyens (46, 47) au moyen desquels une partie des tiges végétales peut être entraînée dans une direction formant un angle avec la direction dans laquelle une autre partie des tiges végétales peut être entraînée.

10. Machine selon la revendication 9, caractérisée en ce que les moyens (46, 47) sont constitués par des parties adjacentes et disposées en opposition, des rouleaux presseurs coniques (35, 36), dont celles de ces parties qui sont, dans les rouleaux presseurs individuels (35, 36), adjacentes l'une à l'autre, et les parties opposées des différents rouleaux presseurs coniques (35, 36) ont une variation de conicité mutuellement opposée dans une direction surtout horizontale s'étendant transversalement au sens de marche du travail.

11. Machine selon la revendication 10, caractérisée en ce que les rouleaux presseurs coniques (35, 36) sont disposés, l'un par rapport à l'autre, de telle sorte qu'une partie d'un rouleau conique est disposée pratiquement au dessus d'une partie de l'autre rouleau conique ayant une variation de conicité dans le sens opposé.

12. Machine selon l'une quelconque des revendications précédentes, caractérisée en ce que la machine comporte une barre de coupe (1) ainsi qu'au moins un organe (25) déplacant la récolte, lequel est rotatif autour d'un arbre (26), situé approximativement dans le sens de marche du travail, l'organe (25) déplacant la récolte étant disposé près de l'extrémité postérieure de la barre de coupe (1).

13. Machine selon la revendication 12, caractérisée en ce que la machine est munie de deux organes (25) déplaçant la récolte, qui sont rotatif autour d'arbres (26) s'étendant approximativement dans le sens de marche du travail et qui sont disposés de part et d'autre de la barre de coupe (1) derrière la barre de coupe (1) et à une certaine distance des extrémités de celle-ci.

14. Machine selon la revendication 12 ou 13, caractérisée en ce qu'un organe (25) déplacant la récolte est d'une conception telle qu'il projette les tiges végétales en travers sur les tiges végétales tombant dans le sens de marche du travail.

15. Machine selon la revendication 14, caractérisée en ce que le moyen de compactage (29, 64) est disposé derrière la barre de coupe (1) et derrière un organe (25) déplacant la récolte, de telle manière que, après avoir été tassées, les tiges végétales tombant dans le sens de marche du travail sont étroitement entrelacées avec les tiges végétales tombant sur elles dans le sens transversal au sens de marche du travail.

16. Machine selon l'une quelconque des revendications précédentes, caractérisée en ce que la machine comporte des moyens (64) au moyen desquels la récolte peut être déposée en un andain sur le sol, de telle manière que sous l'andain un ou plusieurs espaces en forme de tunnels sont produits dans le sens de marche du travail.

17. Machine selon l'une quelconque des revendications précédentes, caractérisée en ce que la machine est munie d'éléments en forme de tunnels (46) qui sont disposés de telle sorte qu'à partir de l'organe de compactage (29) l'andain est déposé sous la forme d'un tunnel par l'intermédiaire des éléments en forme de tunnels (64).

18. Machine selon la revendication 17, caractérisée en ce que les éléments en forme de tunnels (64) s'étendent à partir de la machine jusque près du sol.
